# EUROPEAN PATENT APPLICATION

(11) **EP 0 778 420 A1**
(43) Date of publication of application: **11.06.1997**
(21) Application number: 96308693.9
(22) Date of filing: 02.12.1996
(51) Int. Cl.: F16B 37/04

(54) **Clip-on fastening device**

(30) Priority: 04.12.1995 US 566609
(71) Applicant: EATON CORPORATION, Cleveland, Ohio 44114-2584 (US)
(72) Inventor: Barnes, William Joseph, Waterford, Michigan 48329 (US); Grabowski, Joseph Lawrence, Shelby township, Michigan 48315 (US); Danby, Michael, Stoney Creek, Ontario, L8J I53 (CA); Wilusz, Jan, Hamilton, Ontario, L8K 6K3 (CA)
(74) Representative: Douglas, John Andrew

(57) **Abstract**

According to the invention, the clip-on type fastener (10) has first and second spaced apart legs (12,14) which extend from a closed end to an open end operative to permit the installation of the fastener onto the edge of a panel member having an open ended slot in the edge thereof. The first leg (12) has a hollow tubular boss (20) extending therefrom toward the second leg (14) and having an abutment end face (22) which is predeterminedly spaced from the first leg (12). A thread engaging opening (24) in the second leg (14) registers with the hollow tubular boss (20) so that the installation of a threaded fastener through the tubular boss (20) and into the thread engaging opening (24) causes the second leg (14) to be drawn toward the first leg (12) and into engagement with the abutment end face (22) to thereby establish a predetermined space relationship between the legs (12,14) for gripping the panel member therebetween. The hollow tubular boss (20) preferably has a diameter which corresponds closely to the size of the open ended slot of the panel member so that the tubular boss (20) engages the panel member to locate the fastener on the panel member. In addition, the second leg (14) has a hood structure which extends integrally from the open end thereof, of a general "c" shape, beyond the end of the fastener, and terminates in close proximity with the closed end of the second leg (14) to substantially shield the installed fastener.

## Description

The invention relates to an improved fastener which clips-on to the edge of an apertured panel member for receiving a threaded screw and, more particularly, a fastener having an extruded boss which defines a predetermined spacing between spaced apart legs of the fastener.

### Background of the Invention

It is well known to fashion a female threaded fastening clip which clips-on to the edge of a panel member for receiving a threaded screw.

U.S. Patents, Rattman et al., 5,256,018 and Oehlke et al., 4,508,477 are examples of such fasteners and include spaced apart legs which spread apart to receive the edge of the panel member and overlie the aperture of the panel member. One of the legs has an opening through which a screw is inserted and the other leg has a frusto-conical projection which defines a helically edged opening for threadedly engaging with the threads of the screw as the screw is rotated into the clip. A pair of arms are bent from the second leg and bent toward each other to provide spaced apart free ends which are poised above the helical opening. Accordingly, the advancement of the threaded screw causes the screw to enter the space between the free ends so that the screw is threadedly engaged by the arms. When the head of the threaded screw seats against the first leg, continued rotation of the screw forcibly draws the second leg closer and harder toward the first leg to grip the panel member between the legs.

Fasteners of the aforedescribed type are commonly employed in a product application where it is desired to fixedly connect the apertured panel member tO a support panel. The support panel has a round aperture for receiving a threaded screw. The aperture in the support panel is aligned with the aperture in the panel member and its fastener and then the screw is installed first through the aperture of the support panel and then into the fastener of the panel member. The fastener functions to hold the screw in place and the presence of the screw extending between the two panels affixes the panels together.

In some product applications, it may be desirable to connect together a panel member and a support panel in a fashion which will permit the subsequent withdrawal of the panel member away from the support member without necessity for removing the threaded screw. In such applications, exemplified by the air bag door of U.S. Barnes Patent 5,333,901, the panel member is provided with a slot adjacent its edge. The fastener is clipped on to the slotted edge of the panel member. Installation of the threaded screw tightens the fastening clip to cause the slotted edge of the panel to be tightly gripped between the legs of the fastener. Upon deployment of the airbag, the slotted edge of the panel member is forcibly withdrawn from between the legs of the fastener while the threaded screw remains in place in the support panel.

The present invention provides a new and improved clip-on fastener which is specially suited to applications where it may be desirable to control the spacing between the fastener legs as the screw is installed and thereby better determine the force with which the clip will forcibly and releasably grip the panel member.

### Summary of the Invention

According to the invention, the clip-on type fastener has first and second spaced apart legs which extend from a closed end to an open end operative to permit the installation of the fastener onto the edge of a panel member having an open ended slot in the edge thereof. The first leg has a hollow tubular boss extending therefrom toward the second leg and having an abutment end face which is predeterminedly spaced from the first leg. A thread engaging opening in the second leg registers with the hollow tubular boss so that the installation of a threaded screw through the tubular boss and into the thread engaging opening causes the second leg to be drawn toward the first leg and into engagement with the abutment end face to thereby establish a predetermined space relationship between the legs for gripping the panel member therebetween. The hollow tubular boss preferably has a diameter which corresponds closely to the size of the open ended slot of the panel member so that the tubular boss engages the panel member to locate the fastener on the panel member. In addition, the second leg has a hood structure of a general "c" shape which extends integrally from the open end thereof beyond the end of the fastener and terminates in close proximity with the closed end of the second leg to substantially shield the end of the installed fastener.

### Description of the Drawings

Figure 1 is a perspective view of the fastener;
Figure 2 is a side elevation view of the fastener, having parts broken away and in section;
Figure 3 is a section view taken in the direction of arrows 3-3 of Figure 2;
Figure 4 is a section view taken in the direction of arrows 4-4 of Figure 2;
Figure 5 shows the fastener installed condition to releasably connect a panel member to a support panel; and
Figure 6 is a section view taken in the direction of Figure 6-6 of Figure 5.

### Description of the Preferred Embodiment

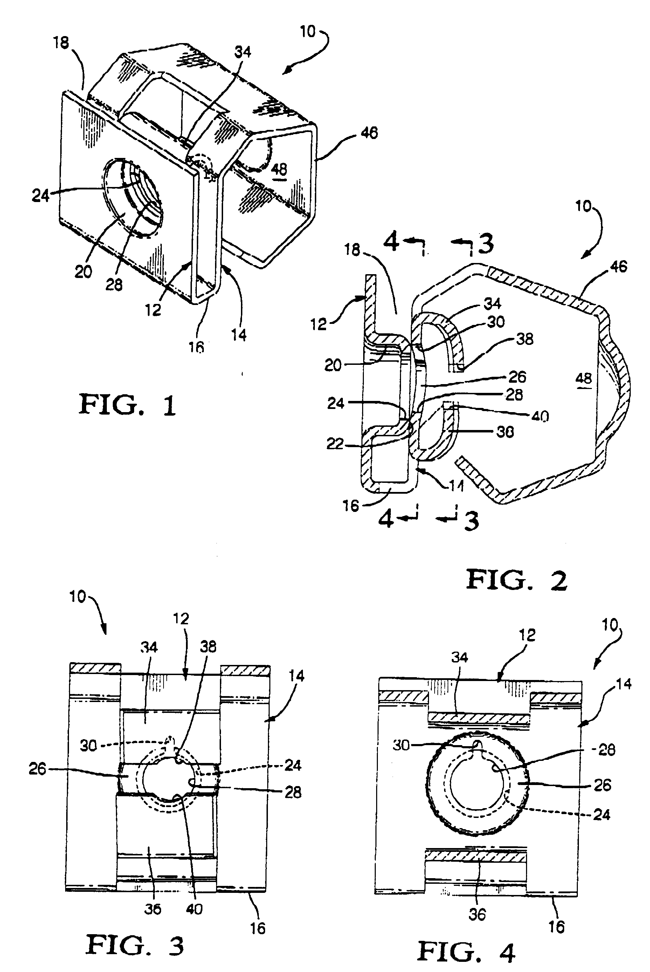

Referring to Figure 1, a clip-on fastener 10 is made of a resilient material such as suitable spring steel and is a manufactured of a one-piece construction by bending, trimming, punching and extruding into the configuration shown in Figures 1-4.

Fastener 10 has a first leg 12 and a second leg 14 which are spaced apart from one another and extend from a closed end 16 to an open end space 18. Leg 12 includes an extruded tubular boss 20 which extends toward the second leg 14 and has an end face 22 having a clearance hole 24 therethrough for receiving a threaded screw. The second leg 14 has a slight frusto-conical projection 26 having a screw hole 28 therethrough as best seen in Figure 4. The edge of the frusto-conical projection 26 defining the screw hole 28 is helical as facilitated by a relief notch 30. The helical edge 28 threadedly engages a screw, as will be discussed hereinafter.

A pair of arms 34 and 36 are lanced from the second leg 14 and bent toward each other to define spaced apart free edges 38 and 40 adapted to be treadedly engaged the screw as will be discussed hereafter.

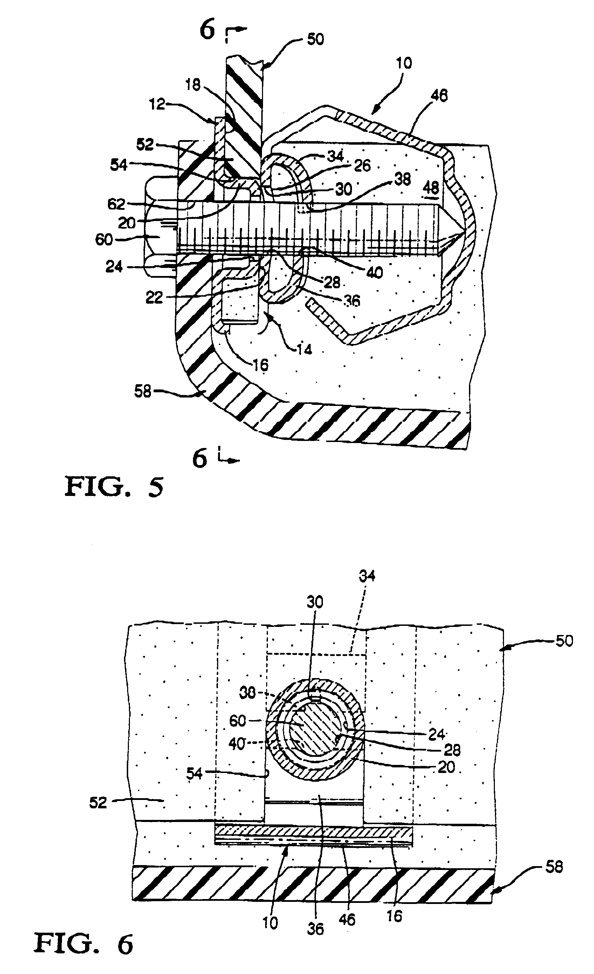

As best seen in Figures 2 and 5, the second leg 14 has an integral hood structure 46 formed therewith. The hood structure is of generally "c" shaped configuration and defines a shielded cavity 48. By virtue of the general "c" shape, it is seen that the hood structure 46 reaches around the end of the threaded screw and returns into close proximity of the second leg 14 adjacent the closed end 16 thereof.

Figure 5 shows the fastener 10 in use and installed in a typical application. A panel member 50 has an edge portion 52 which has an open end slot 54 provided therein. The fastener 10 is clipped onto the edge 52 of the panel member 50 by aligning the edge 52 with the open end 18 of the fastener 10. The fastener 10 is then forced onto the edge 52 with the extruded boss 20 fitting into the open end slot 54 as the edge 52 enters the open end 18 and is pressed toward the closed end 16. The extruded boss 20 is preferably of a diameter which closely corresponds with the width of the open end slot 54 so that the extruded boss 20 effectively guides the installation of the fastener 10 on to the panel member edge 52. The panel member 50 is then juxtaposed with the support panel 58 and the threaded screw 60 is rotationally installed through hole 62 of the support panel 58 and into the fastener 10. Upon the rotation of the threaded screw 60, the screw 60 first becomes threadedly engaged with the helical edge 26 of the second leg and then with the free ends 38 and 40 of the arms 34 and 36. Upon continued rotation and complete tightening of the screw 60, the second leg 14 is drawn into engagement with the abutment end face 24 of the extruded boss 20 to thereby stop further movement of the legs toward one another and control the force with which the legs grip onto the edge 52 of the panel member 50. With the screw 60 fully installed, as shown in Figure 5, it is seen that the excess length portion of the threaded screw 60 is received within the cavity 48 where it is shielded by the hood structure 46. Thus, the hood structure covers the pointed end of the screw 60 to protect objects which might otherwise come into contact with the unprotected end of the screw.

It will be understood that the length of the extruded boss 20 is selected to establish the desired predetermined spacing between the legs, and accordingly, the length of the extruded boss can be varied depending on the application in which the fastener will be employed.

As seen in Figure 5, a release force will applied to the panel member 50 in the direction of arrow "F" will attempt to remove the edge 52 of the panel 50 from between the legs 12 and 14. If the release force attains a level which exceeds the frictional grip of the legs against the panel member 50, the panel member 50 will slide upwardly and become released from the clip 10.

Thus, it is seen that the invention provides a new and improved clip-on fastener particularly suited for releasably connecting together a pair of panels.

## Claims

1. A clip on type fastener having first and second spaced apart legs extending from a closed end to an open end operative to receive an edge of a panel member thereinto for securement of a threaded member receivable through an open ended slot of the panel member, said fastener having:
a hollow tubular boss extending from the first leg toward the second leg and having an abutment end face facing the second leg and predeterminedly spaced from the first leg;
a thread engaging opening in the second leg registering with the hollow tubular boss so that the installation of the threaded fastener through the tubular boss and into the thread engaging opening causes the second leg to be drawn toward the first leg and into engagement with the abutment end face to thereby establish a predetermined spaced relationship between the legs for gripping the panel member therebetween.

2. The fastener of Claim 1 in which the hollow tubular boss has an outer diameter corresponding closely to the size of the open ended slot of the panel member so that the tubular boss engages the panel member to locate the fastener on the panel member.

3. The fastener of Claim 1 in which the second leg has a hood structure extending integrally from the open end thereof and reaching over the end of the installed fastener to shield the end of the fastener.

4. The fastener of Claim 3 in which the hood structure is generally C-shaped and extends from the open end of the second leg, beyond the end of the fastener, and terminates in close proximity with the closed end of the second leg to substantially shield the installed fastener.
